# EUROPEAN PATENT APPLICATION

(11) **EP 3 147 742 A2**
(43) Date of publication of application: **29.03.2017**
(21) Application number: 16189763.2
(22) Date of filing: 20.09.2016
(51) Int. Cl.: G05D 1/08, B62K 11/00, G05D 1/02

(54) **CONTROL METHOD AND CONTROL APPARATUS FOR A BALANCED VEHICLE, COMPUTER PROGRAM AND RECORDING MEDIUM**

(30) Priority: 28.09.2015 CN 201510627152
(71) Applicant: Xiaomi Inc., Beijing 100085 (CN)
(72) Inventor: LIU, Huayijun, Beijing 100085 (CN); TANG, Mingyong, Beijing 100085 (CN); CHEN, Tao, Beijing 100085 (CN)
(74) Representative: Underwood, Nicolas Patrick

(57) **Abstract**

The present invention discloses a control method and apparatus for a balanced vehicle, a computer program and a recording medium, relating to the field of automatic control. The method comprises: identifying (202) the type of an obstacle in front of the balanced vehicle; if the type of the obstacle is impassable obstacle, controlling (204) the balanced vehicle to decelerate.

## Description

### TECHNICAL FIELD

The present invention relates to the field of automatic control, in particular to a control method and apparatus for a balanced vehicle, a computer program and a recording medium.

### BACKGROUND

A balanced vehicle is also known as an electric balanced vehicle, or as a self-balanced vehicle, and now it is a new kind of short-distance transportation means.

The balanced vehicle is driven by an internal driving motor to go forward and backward. If there is an obstacle in front of the balanced vehicle, the driver may fall over.

### SUMMARY

To overcome the problem in the related art, the present invention provides a control method and apparatus for a balanced vehicle, a computer program and a recording medium. The technical solution is as follows:

According to a first aspect of the embodiments of the present invention, there is provided a control method for a balanced vehicle, the method comprising:
identifying the type of an obstacle in front of the balanced vehicle;
if the type of the obstacle is impassable obstacle, controlling the balanced vehicle to decelerate.

In an exemplary embodiment, the type is impassable obstacle or passable obstacle;
the method further comprises:
if the type of the obstacle is passable obstacle, increasing a driving force to the balanced vehicle so that it continues moving.

In an exemplary embodiment, identifying the type of an obstacle in front of the balanced vehicle comprises:
measuring the height of the obstacle in front of the balanced vehicle by means of a distance measuring component;
detecting whether the height of the obstacle is greater than a predetermined threshold;
if the height of the obstacle is greater than the predetermined threshold, identifying the type of the obstacle as impassable type.

In an exemplary embodiment, identifying the type of an obstacle in front of the balanced vehicle comprises:
acquiring an image frame in front of the balanced vehicle by means of an image acquiring component;
identifying the obstacle in the image frame;
calculating the height of the obstacle identified;
detecting whether the height of the obstacle is greater than a predetermined threshold;
if the height of the obstacle is greater than the predetermined threshold, identifying the type of the obstacle as impassable type.

In an exemplary embodiment, the method further comprises:
measuring the distance between the obstacle and the balanced vehicle;
detecting whether the distance is less than a predetermined distance;
if the distance is less than the predetermined distance, controlling the balanced vehicle to decelerate.

In an exemplary embodiment, the method further comprises:
if the type of the obstacle is impassable obstacle, providing an obstacle alert in a predetermined mode;
wherein, the predetermined mode comprises at least one of playing a alert tone, vibrating a predetermine part of the balanced vehicle, and flickering a signal light.

In an exemplary embodiment, the method further comprises:
if the type of the obstacle is impassable obstacle, judging whether there is an alternate route in front of the balanced vehicle;
if the there is the alternate route in front of the balanced vehicle, controlling the balanced vehicle to go along the alternate route;
if there is no alternate route in front of the balanced vehicle, controlling the balanced vehicle to decelerate.

According to a second aspect of the embodiment of the present invention, there is provided a control apparatus for a balanced vehicle, the apparatus comprising:
an identifying module configured to identify the type of an obstacle in front of the balanced vehicle, which type comprising: impassable obstacle;
a first control module configured to, when the type of the obstacle is impassable obstacle, control the balanced vehicle to decelerate.

In an alternative embodiment, the type is impassable obstacle or passable obstacle;
the apparatus further comprises:
a second control module configured to, when the type of the obstacle is passable obstacle, increase a driving force to the balanced vehicle so that it continues moving.

In an exemplary embodiment, the identifying module comprises:
a first measuring sub-module configured to measure the height of the obstacle in front of the balanced vehicle by means of a distance measuring component.
a first detecting sub-module configured to detect whether the height of the obstacle is greater than a predetermined threshold;
a first identifying sub-module configured to, when the height of the obstacle is greater than the predetermined threshold, identify the obstacle as impassable type.

In an exemplary embodiment, the identifying module comprises:
an acquiring sub-module configured to acquire an image frame in front of the balanced vehicle by means of an image acquiring component;
a second identifying sub-module configured to identify the obstacle in the image frame;
a calculating sub-module configured to calculate the height of the obstacle identified;
a second detecting sub-module configured to detect whether the height of the obstacle is greater than a predetermined threshold;
a third identifying sub-module configured to identify the obstacle as impassable type, when the height of the obstacle is greater than the predetermined threshold.

In an exemplary embodiment, the first control module further comprises:
a second measuring sub-module configured to measure the distance between the obstacle and the balanced vehicle;
a third detecting sub-module configured to detect whether the distance is less than a predetermined distance;
a first executing sub-module configured to execute the step of controlling the balanced vehicle to decelerate, when the distance is less than the predetermined distance.

In an exemplary embodiment, the first control module further comprises:
a alert sub-module configured to provide an obstacle alert in a predetermined mode, when the type of the obstacle is impassable obstacle,;
wherein, the predetermined mode comprises at least one of playing a alert tone, vibrating a predetermine part of the balanced vehicle, and flickering a signal light.

In an exemplary embodiment, the apparatus further comprises:
a judging sub-module configured to judge whether there is an alternate route in front of the balanced vehicle, when the type of the obstacle is impassable obstacle;
a third control sub-module configured to control the balanced vehicle to go along the alternate route, when the there is an alternate route in front of the balanced vehicle;
the first control module is further configured to execute the step of controlling the balanced vehicle to decelerate, when there is no alternate route in front of the balanced vehicle,.

According to a third aspect of the present invention, there is provided a balanced vehicle, comprising:
a control chip;
a storage for storing instructions executable by the control chip;
wherein, the control chip is configured to:
   identify the type of an obstacle in front of the balanced vehicle;
   if the type of the obstacle is impassable obstacle, control the balanced vehicle to decelerate.

In one particular embodiment, the steps of the control method for a balanced vehicle are determined by computer program instructions.

Consequently, according to a fourth aspect, the invention is also directed to a computer program for executing the steps of a control method for a balanced vehicle as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by the embodiments of the present invention can include the following advantageous effect:
identifying the type of the obstacle in front of the balanced vehicle, and controlling the balanced vehicle to decelerate if the type of the obstacle is impassable obstacle, solves the problem of the driver being likely to fall over once there is an impassable obstacle in front of the balanced vehicle, thereby achieving the effect that the balanced vehicle can automatically identify the obstacle and try to prevent tumbles caused by rapid collision with the obstacle when the obstacle is an impassable obstacle.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram showing an implementing environment involved in the control method for a balanced vehicle according to part of the exemplary embodiments;
Fig.2 is a flowchart showing a control method for a balanced vehicle according to an exemplary embodiment;
Fig.3 is a flowchart showing a control method for a balanced vehicle according to an exemplary embodiment;
Fig. 4A is a diagram showing the implementing effect of identifying an obstacle by a distance measuring component according to an exemplary embodiment;
Fig. 4B is a diagram showing the implementing effect of judging whether there is an alternate route in the front according to an exemplary embodiment;
Fig. 5 is a flowchart showing a control method for a balanced vehicle according to an exemplary embodiment;
Fig. 6 is a diagram showing the implementing effect of identifying an obstacle in an image frame according to an exemplary embodiment;
Fig. 7 is a block diagram showing a control apparatus for a balanced vehicle according to an exemplary embodiment;
Fig. 8 is a block diagram showing a control apparatus for a balanced vehicle according to another exemplary embodiment;
Fig. 9 is a block diagram showing a balanced vehicle according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

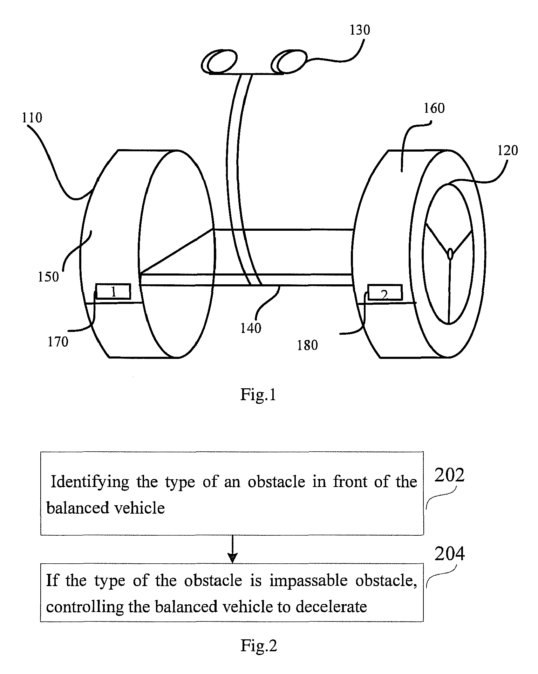

Fig. 1 is a schematic diagram showing an implementing environment involved in the control method for a balanced vehicle according to an exemplary embodiment of the present invention. As shown in Fig. 1, the implementing environment may be a two-wheel balanced vehicle comprising two parallel wheels 110 and 120, wheel housings 150 and 160, a turning control component 130, a load bearing pedal 140 and obstacle identifying components 170 and 180.

The turning control component 130 is connected to the load bearing pedal 140 and can be used to control turning of the two-wheel balanced vehicle. The turning control component 130 can be implemented through manual control, and can also be implemented through leg control, which is not limited in this embodiment.

The obstacle identifying components 170 and 180 are used to identify an obstacle in an heading direction of the two-wheel balanced vehicle. The obstacle identifying components 170 and 180 can be any distance measuring components capable of identifying the size and distance of an object, such as infrared ray sensing apparatus, ultrasonic wave sensing apparatus and laser range finder, etc.; the obstacle identifying components 170 and 180 can also be any image acquiring components capable of capturing images, such as a camera.

In Fig. 1, the obstacle identifying component 170 is provided merely as an example at position 1 of the wheel housing 150, and the obstacle identifying component 180 is provided merely as an example at position 2 of the wheel housing 160. The obstacle identifying components 170 and 180 can also be provided at any possible positions of the two-wheel balanced vehicle foreseeable by a person skilled in the art, such as the position where the load bearing pedal 140 is engaged with the turning control component 130, the position for detecting a front left oblique direction of the left wheel and the position for detecting a front right oblique direction of the right wheel, etc.. Besides, the number of the obstacle identifying components 170 and 180 is given as two as an example in this embodiment, and the number of the obstacle identifying component should be at least one. This is not limited in this embodiment. The obstacle identifying components 170 and 180 can also have an ability to move in a vertical direction, or, the obstacle identifying components 170 and 180 have an ability to rotate in four directions, namely, up, down, left and right.

What needs to be explained in supplement is that, the two-wheel balanced vehicle may also comprise other components, such as a control chip, a storage, and a driving motor, etc. (not shown in the figures). Wherein, the control chip is respectively connected to the driving motor and the above mentioned turning control component 130 and obstacle identifying components 170 and 180, and controls the moving forward, moving backward, stop and turning of the two-wheel balanced vehicle according to the executable instructions stored in the storage. This part of content will not be described expansively in the embodiments of the present invention.

What needs to be explained in supplement is that, the above two-wheel balanced vehicle is just an exemplary explanation of an implementing environment involved in the control method for a balanced vehicle provided in the embodiments of the present invention. The control method for a balanced vehicle of the present invention can be used not only in two-wheel balanced vehicle, but also in other balanced vehicles identical or similar to the two-wheel balanced vehicle, such as single-wheel balanced vehicle. The embodiments of the present invention will not limit this, and the implementing environments thereof will not be shown one by one either.

Fig. 2 is a flowchart showing a control method for a balanced vehicle according to an exemplary embodiment. As shown in Fig. 2, the method for a balanced vehicle is used in the balanced vehicle shown in Fig. 1, and comprises the following steps.

In step 202, the type of an obstacle in front of the balanced vehicle is identified.

Alternatively, the control chip identifies the type of an obstacle in front of any of the wheels by means of an obstacle identifying component.

Alternatively, the obstacle identifying component comprises: a distance measuring component and/or an image acquiring component.

In step 204, if the type of the obstacle is impassable obstacle, the balanced vehicle is controlled to decelerate.

In conclusion, the control method for a balanced vehicle provided in this embodiment identifies the type of the obstacle in front of the balanced vehicle, and controls the balanced vehicle to decelerate if the type of the obstacle is impassable obstacle, thereby solves the problem that the driver is likely to fall over once there is an impassable obstacle in front of the balanced vehicle, and achieves the effects that the balanced vehicle can automatically identify the obstacle, and try to prevent tumbles caused by rapid collision with the obstacle when the obstacle is an impassable obstacle.

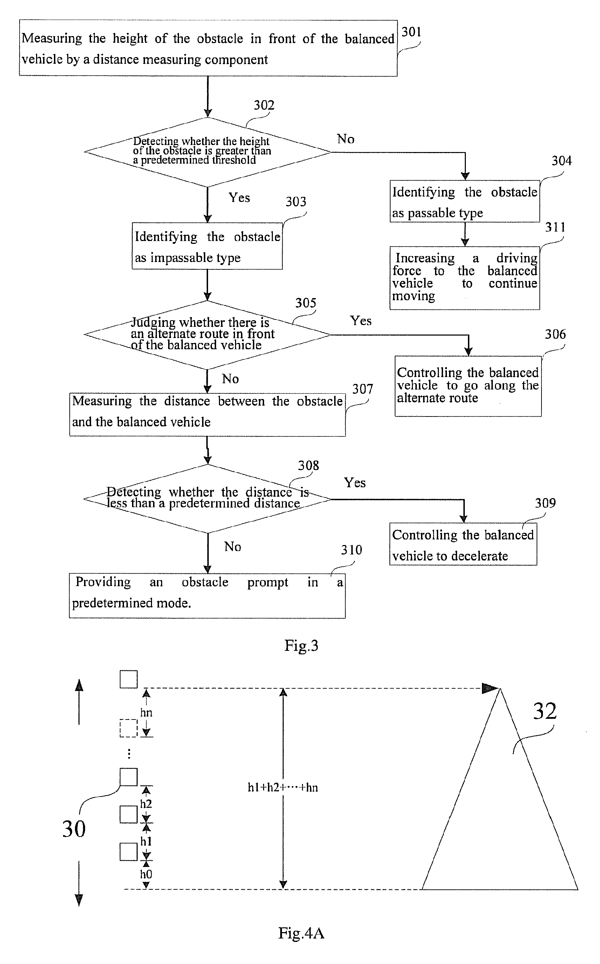

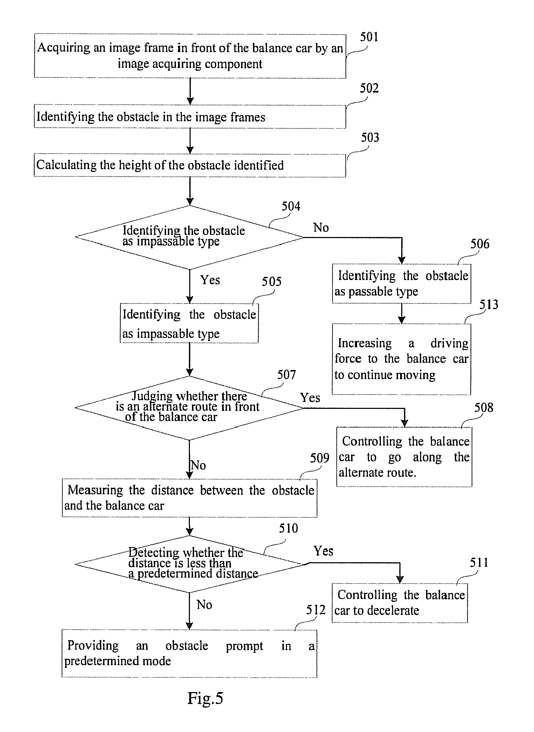

Alternatively, the implementing methods of identifying the type of an obstacle in front of the balanced vehicle in step 202 comprise but are not limited to the following two methods:
the first method is identifying the type of the obstacle by means of the distance measuring component, which will be described with the embodiment shown in Fig. 3 in the following.
the second method is identifying the type of the obstacle by means of the image acquiring component, which will be described with the embodiment shown in Fig. 5 in the following.

Fig. 3 is a flowchart showing a control method for a balanced vehicle according to another exemplary embodiment. As shown in Fig. 3, this embodiment illustrates by applying the control method of a balanced vehicle to the two-wheel balanced vehicle shown in Fig. 1, and the control method for a balanced vehicle comprises the following steps.

In step 301, the height of the obstacle in front of the balanced vehicle is measured by means of a distance measuring component.

The control chip of the balanced vehicle controls the distance measuring component to transmit a detection signal outwards at intervals at every predetermined time, and the detection signal may be laser, infrared ray and ultrasonic wave, etc.. A reflected signal will be returned when the detection signal encounters an obstacle. Thus, when the distance measuring component receives the reflected signal, it indicates that there is an obstacle in the front. In general, the height of the obstacle is not lower than the height at which the distance measuring component is situated.

For example, the distance measuring component mounted on the housing of the balanced vehicle is located at a position 5cm away from the ground, if a reflected signal of the detection signal is received, it indicates that there is an obstacle with a height of at least 5cm in front of the balanced vehicle; and if the reflected signal is not received, it indicates that there is no obstacle with a height of over 5cm in front of the balanced vehicle.

Alternatively, as shown in Fig. 4A, the distance measuring component 30 is capable of moving up and down in a vertical direction on the balanced vehicle. The distance measuring component 30 can transmit a detection signal at different positions in the vertical direction. Alternatively, the distance measuring component 30 transmits a detection signal at the height h0 from the ground, elevates the height by h1 and transmits the detection signal again after it receives a reflected signal, and elevates the height by h2 and transmits the detection signal once again after it receives the reflected signal again. The process repeats, finally, when the height from the ground is h1+h2+...+hn, the distance measuring component 30 does not receive the reflected signal, thereby detects the top of the obstacle 32. At this time, the height of the obstacle measured is h1+h2+...+hn.

What needs to be explained is that, the embodiments of the present invention do not limit the implementing method of measuring the height of the obstacle by means of the distance measuring component. For example, the balanced vehicle may also be provided with a plurality of distance measuring components at different positions thereof to measure the height of the obstacle according to whether each of the plurality of distance measuring components has received the reflected signal of the detection signal.

In step 302, whether the height of the obstacle is greater than a predetermined threshold is detected.

Alternatively, the predetermined threshold is the maximum height of the obstacle that can be passed by the balanced vehicle. The predetermined threshold may be 1/x of the height of the tyre or other numerical values, which will not be limited in this embodiment.

If the height of the obstacle is greater than the predetermined threshold, turn to step 303;
if the height of the obstacle is less than the predetermined threshold, turn to step 304;

In step 303, if the height of the obstacle is greater than the predetermined threshold, the obstacle is identified as impassable type.

When the obstacle is impassable type, turn to step 305.

In step 304, if the height of the obstacle is not greater than the predetermined threshold, the obstacle is identified as passable type.

When the obstacle is passable type, turn to step 311.

In step 305, whether there is an alternate route in front of the balanced vehicle is judged.

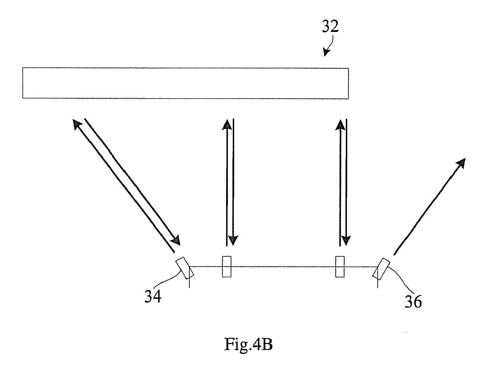

This step comprises but is not limited to the following two implementing methods:
1. Whether there is an alternate route at the left and right sides of the advancing direction is judged by means of a distance measuring component provided in the front left oblique direction or front right oblique direction of the balanced vehicle.
   Alternatively, the front left oblique direction is a direction that forms a first included angle from the right forward direction to the left, and the front right oblique direction is a direction that forms a second included angle from the right forward direction to the right. The distance measuring component judges whether there is an obstacle in the front left oblique direction or the front right oblique direction, and if there is no obstacle, there is an alternate route.
   For example, as shown in Fig. 4B, the balanced vehicle is provided with a distance measuring component 34 for detecting the front left oblique direction of the left wheel and a distance measuring component 36 for detecting a front right oblique direction of the right wheel.
   If the distance measuring component for detecting the right forward direction receives a reflected signal of the detection signal, and the distance measuring component 34 also receives the reflected signal of the detection signal, but the distance measuring component 36 does not receive the reflected signal, it indicates that there is an alternate route in the front right direction.
   Similarly, if the distance measuring component for detecting the right forward direction receives the reflected signal of the detection signal, and the distance measuring component 36 also receives the reflected signal of the detection signal, but the distance measuring component 34 does not receive the reflected signal, it indicates that there is an alternate route in the front left direction.
2. Whether there is an alternate route at the left and right sides of the advancing direction is judged by means of a distance measuring component capable of rotating in a horizontal direction.

That is to say, the distance measuring component is capable of turning to the left, or, turning to the right, or turning to both the left and the right. Then, the distance measuring component judges whether there is an obstacle in the front left oblique direction or in the front right oblique direction, and if there is no obstacle, there is an alternate route.

If there is an alternate route, step 306 is entered; and if there is no alternate route, turn to step 307.

In step 306, if there is the alternate route in front of the balanced vehicle, the balanced vehicle is controlled to go along the alternate route.

If there is the alternate route in front of the balanced vehicle, the control chip controls the balanced vehicle to go along the alternate route.

In step 307, the distance between the obstacle and the balanced vehicle is measured.

Alternatively, the control chip measures the distance between the obstacle in front of any of the wheels and the balanced vehicle by means of the distance measuring component. For example, the control chip acquires the distance by calculation according to the transmission time of the detection signal and the reception time of the reflected signal, in combination with the traveling speed of the balanced vehicle.

In step 308, whether the distance is less than a predetermined distance is detected.

The control chip detects whether the distance between the obstacle and the balanced vehicle is less than the predetermined distance.

Alternatively, the predetermined distance is the maximum distance needed when the balanced vehicle turns. The predetermined distance may be x times of the diameter of the tyre or other numerical values, which is not limited in this embodiment.

Alternatively, the predetermined distance is in positive proportion to the current speed of the balanced vehicle, faster the current speed is, larger is the predetermined distance; and slower the current speed is, smaller is the predetermined distance.

If the distance is less than the predetermined distance, turn tostep 309 entered; if the distance is greater than the predetermined distance, turn to step 310.

In step 309, if the distance is less than the predetermined distance, the balanced vehicle is controlled to decelerate, and an obstacle alert is provided in a predetermined mode.

If the distance is less than the predetermined distance, the control chip controls the balanced vehicle to decelerate to stop. In general, the control chip controls the balanced vehicle to decelerate and stop before the obstacle; but the situation where the balanced vehicle has collided with the obstacle before it stops completely during the deceleration is also possible to happen.

Alternatively, the control chip also provides the obstacle alert in a predetermined mode, wherein the predetermined mode comprises at least one of playing a alert tone, vibrating a predetermine part of the balanced vehicle, and flickering a signal light.

For example, when identifying that there is an impassable obstacle in front of the balanced vehicle, and when the distance between the impassable obstacle and the balanced vehicle reaches the predetermined distance , the balanced vehicle will make out a beep alert tone.

In step 310, if the distance is less than the predetermined distance, the balanced vehicle is controlled so that it continues moving.

In step 311, if the type of the obstacle is passable obstacle, a driving force is increased to the balanced vehicle so that it continues moving.

If the type of the obstacle is passable obstacle, the control chip controls the driving motor to increase a driving force to the balanced vehicle to move on.

What needs to be explained in supplement is that, the sequence of the above steps 305, 307 and 310 are not limited to the above sequence, and is not limited in this embodiment.

In conclusion, the control method for a balanced vehicle provided in this embodiment identifies the type of the obstacle in front of the balanced vehicle, and controls the balanced vehicle to decelerate if the type of the obstacle is impassable obstacle, thereby solves the problem that the driver is likely to fall over once there is an impassable obstacle in front of the balanced vehicle, and achieves the effect that the balanced vehicle can automatically identify the obstacle and try to prevent tumble caused by rapid collision with the obstacle when the obstacle is an impassable obstacle.

The control method for a balanced vehicle provided in this embodiment measures the height and distance of the obstacle by means of the distance measuring component, thereby enables the balanced vehicle to identify the type of the obstacle and decelerate to avoid the obstacle according to the distance between the obstacle and the balanced vehicle.

The control method of the balanced vehicle provided in this embodiment also judges whether there is an alternate route in front of the balanced vehicle, and automatically controls the balanced vehicle to go along the alternate route if there is an alternate route, thereby achieves the effect of preventing collision between the balanced vehicle and the obstacle without affecting the normal traveling of the balanced vehicle.

Fig. 5 is a flowchart showing a control method for a balanced vehicle according to an exemplary embodiment. As shown in Fig. 5, this embodiment illustrates by applying the control method of a balanced vehicle to the implementing environment shown in Fig. 1, and the method comprises the following steps.

In step 501, an image frame in front of the balanced vehicle is acquired by an image acquiring component.

The image acquiring component may be mounted on each of the two wheel housings of the balanced vehicle, and may also be mounted at an engagement part of the load bearing pedal and the turning control component.

The control chip controls the image acquiring component to acquire an image in front of the balanced vehicle to form continuous image frames frame-by-frame.

In step 502, the obstacle in the image frames is identified.

Since color difference between the ground and other objects on the ground is very obvious, the ground and other objects in the image frames can be determined according to in pixel change in the image frames.

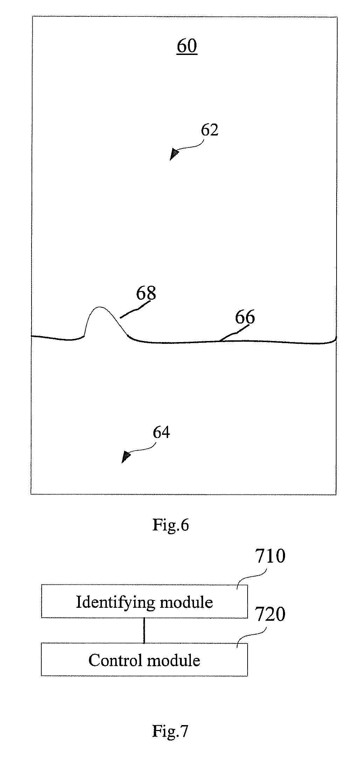

Alternatively, as shown in Fig. 6, after the control chip obtains an image frame 60 acquired by the image acquiring component, acqurires a first region 62 and a second region 64 by binary process of the image frame 60 according to the color difference , and a road line 66 is formed at an intersection of the first region 62 and second region 64. The control chip detects whether the road line 66 has a protrusion 68. If the road line 66 has a protrusion 68, the control chip identifies the protrusion 68 as an obstacle.

In step 503, the height of the obstacle identified is calculated.

As a first possible implementing method, the control chip calculates the height of the obstacle according to the height of the obstacle in the image frame and a predetermined measuring scale, for example, if the predetermined measuring scale is 1:3, when the height of the obstacle in the image frame is 1cm, the height of the obstacle calculated is 3cm. When the obstacle is closer to the balanced vehicle, the height of the obstacle calculated is also closer.

As a second possible implementing method, the balanced vehicle is also provided with a distance measuring component. The distance measuring component can measure a distance from the obstacle to the balanced vehicle. The control chip first searches for a measuring scale corresponding to the distance, and then calculates the height of the obstacle according to the height of the obstacle in the image frame and the measuring scale corresponding to the distance, for example, if the measuring scale corresponding to the distance is 1:5, when the height of the obstacle in the image frame is 1cm, the height of the obstacle calculated is 5cm.

As a third possible implementing method, there are two image acquiring components, and the control chip can calculate an actual height of the obstacle according to the protrusion (i.e., the obstacle) in two image frames acquired by the two image acquiring components in combination with the binocular imaging principle.

It needs to be noted that this embodiment does not define the way by which the control chip calculates the height of the obstacle.

In step 504, whether the height of the obstacle is greater than a predetermined threshold is detected.

The control chip detects whether the height of the obstacle calculated is greater than the predetermined threshold.

Alternatively, the predetermined threshold is the maximum height of the obstacle that can be passed by the balanced vehicle.

If the height of the obstacle is greater than the predetermined threshold, turn to step 505;
if the height of the obstacle is less than the predetermined threshold, turn to step 506;

In step 505, if the height of the obstacle is greater than the predetermined threshold, the obstacle is identified as impassable type.

When the obstacle is impassable type, turn to step 507.

In step 506, if the height of the obstacle is less than the predetermined threshold, the obstacle is identified as passable type.

When the obstacle is passable type, turn to step 513.

In step 507, when the obstacle is impassable type, whether there is an alternate route in front of the balanced vehicle is judged.

This step comprises but is not limited to the following three implementing methods:
1. Judging whether there is an alternate route at the left and right sides of the heading direction through the image frames acquired by the image acquiring component.
   By similar process with step 501, the control chip judges whether there is an obstacle in the front left oblique direction or the front left oblique direction through the image frames acquired by the image acquiring component, and if there is no obstacle, there is an alternate route.
   Alternatively, the front left oblique direction is a direction that forms a first included angle from the right forward direction to the left, and the front right oblique direction is a direction that forms a second included angle from the right forward direction to the right.
2. Whether there is an alternate route at the left and right sides of the advancing direction is judged by means of a distance measuring component provided in the front left oblique direction or the front right oblique direction of the balanced vehicle.
   The control chip judges whether there is any obstacle in the front left oblique direction or the front right oblique direction by means of the distance measuring component, and if there is no obstacle, there is an alternate route.
3. Whether there is an alternate route at the left and right sides in the heading direction is judged by means of a distance measuring component capable of rotating in a horizontal direction.

That is to say, the distance measuring component is capable of turning to the left, or, turning to the right, or turning to both the left and the right. Then, the control chip judges whether there is an obstacle in the front left oblique direction or the front right oblique direction by means of the distance measuring component, and if there is no obstacle, there is an alternate route.

If there is an alternate route, turn to step 508; and if there is no alternate route, turn to step 509.

In step 508, if there is the alternate route in front of the balanced vehicle, the balanced vehicle is controlled to go along the alternate route.

If there is the alternate route in front of the balanced vehicle, the control chip controls the balanced vehicle to go along the alternate route.

In step 509, the distance between the obstacle and the balanced vehicle is measured.

Alternatively, the control chip measures the distance between the obstacle in front of any of the wheels and the balanced vehicle by means of the distance measuring component. For example, the control chip acquires the distance by calculation according to the transmission time of the detection signal and the reception time of the reflected signal, in combination with the traveling speed of the balanced vehicle.

In step 510, whether the distance is less than a predetermined distance is detected.

The control chip detects whether the distance between the obstacle and the balanced vehicle is less than the predetermined distance.

Alternatively, the predetermined distance is the maximum distance needed when the balanced vehicle turns. The predetermined distance may be x times of the diameter of the tyre or other numerical values, and is not defined in this embodiment.

Alternatively, the predetermined distance is in positive proportion to the current speed of the balanced vehicle, faster the current speed is, larger is the predetermined distance; and slower the current speed is, smaller is the predetermined distance.

If the distance is less than the predetermined distance, turn to step 511; if the distance is greater than the predetermined distance, turn to step 512;
in step 511, if the distance is less than the predetermined distance, the balanced vehicle is controlled to decelerate, and an obstacle alert is provided in a predetermined mode.

If the distance is less than the predetermined distance, the control chip controls the balanced vehicle to decelerate to stop. In general, the control chip controls the balanced vehicle to decelerate and stop before the obstacle; but the situation where the balanced vehicle has collided with the obstacle before it stops completely during the deceleration is possible to happen.

Alternatively, the control chip also provides the obstacle alert in a predetermined mode, wherein the predetermined mode comprises at least one of playing a alert tone, vibrating a predetermine part of the balanced vehicle, and flickering a signal light.

For example, when it is identified that there is an impassable obstacle in front of the balanced vehicle, and when the impassable obstacle reaches in the predetermined distance from the balanced vehicle, the balanced vehicle will make out a beep alert tone.

In step 512, if the distance is less than the predetermined distance, the balanced vehicle is controlled so that it continues moving.

In step 513, if the type of the obstacle is passable obstacle, a driving force is increased for the balanced vehicle so that it continues moving.

If the type of the obstacle is passable obstacle, the control chip controls a driving motor to increase the driving force to the balanced vehicle to move on.

In conclusion, the control method for a balanced vehicle provided in this embodiment identifies the type of the obstacle in front of the balanced vehicle, and controls the balanced vehicle to decelerate if the type of the obstacle is impassable obstacle, thereby solves the problem that the driver is likely to fall over once there is an impassable obstacle in front of the balanced vehicle, and achieves the effect that the balanced vehicle can automatically identify the obstacle and try to prevent tumbles caused by rapid collision with the obstacle when the obstacle is an impassable obstacle.

The control method for a balanced vehicle provided in this embodiment measures the height and distance of the obstacle by means of the image acquiring component, thereby enables the balanced vehicle to identify the type of the obstacle and decelerate to avoid the obstacle according to the distance between the obstacle and the balanced vehicle.

The control method of the balanced vehicle provided in this embodiment also judges whether there is an alternate route in front of the balanced vehicle, and automatically controls the balanced vehicle to go along the alternate route if there is an alternate route, thereby achieves the effect of preventing collision between the balanced vehicle and the obstacle without affecting the normal traveling of the balanced vehicle.

The following are apparatus embodiments of the present invention, used to execute the method embodiments of the present invention. As for details undisclosed in the apparatus embodiments of the present invention, reference can be made to the method embodiments of the present invention.

Fig. 7 is a block diagram showing a control apparatus for a balanced vehicle according to an exemplary embodiment. As shown in Fig. 7, the control apparatus for a balanced vehicle can be implemented as an entirety or a part of the balanced vehicle by means of software, hardware or a combination thereof, the control apparatus of the balanced vehicle comprises but is not limited to: an identifying module 710 and a control module 720.

The identifying module 710 is configured to identify the type of an obstacle in front of the balanced vehicle;
the first control module is configured to, control the balanced vehicle to decelerate when the type of the obstacle is impassable obstacle.

In conclusion, the control apparatus for a balanced vehicle provided in this embodiment identifies the type of the obstacle in front of the balanced vehicle, and controls the balanced vehicle to decelerate if the type of the obstacle is impassable obstacle, thereby solves the problem that the driver is likely to fall over once there is an impassable obstacle in front of the balanced vehicle, and achieves the effect that the balanced vehicle can automatically identify the obstacle and try to prevent tumbles caused by rapid collision with the obstacle when the obstacle is an impassable obstacle.

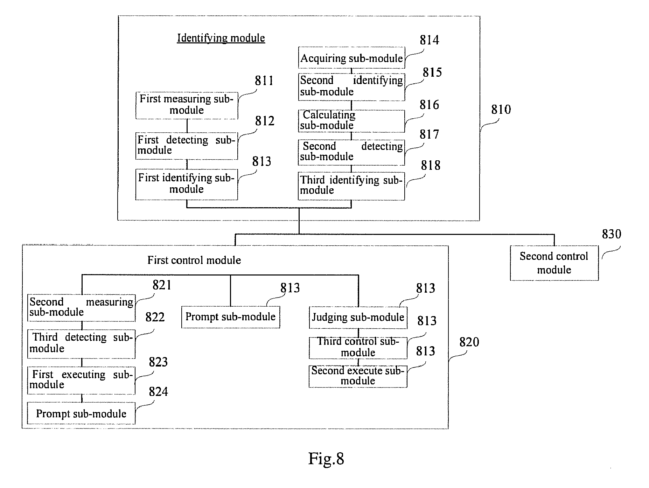

Fig. 8 is a block diagram showing a control apparatus for a balanced vehicle according to another exemplary embodiment. As shown in Fig. 8, the control apparatus for a balanced vehicle can be implemented as an entirety or a part of the balanced vehicle by means of software, hardware or a combination thereof, the control apparatus of the balanced vehicle comprises but is not limited toan identifying module 810 and a first control module 820.

The identifying module 810 is configured to identify the type of an obstacle in front of the balanced vehicle, which type comprises: impassable obstacle;
the first control module 820 is configured to, control the balanced vehicle to decelerate, when the type of the obstacle is impassable obstacle.

Alternatively, the type is impassable obstacle or passable obstacle; the apparatus further comprises: a second control module 830.

The second control module 830 is configured to increase a driving force to the balanced vehicle so that it continues moving, when the type of the obstacle is passable obstacle,.

Alternatively, the identifying module 810 comprises: a first measuring sub-module 811, a first detecting sub-module 812 and a first identifying sub-module 813.

The first measuring sub-module 811 is configured to measure the height of the obstacle in front of the balanced vehicle by means of a distance measuring component;
the first detecting sub-module is configured to detect whether the height of the obstacle is greater than a predetermined threshold;
the first identifying sub-module is configured to identify the obstacle as impassable type, when the height of the obstacle is greater than the predetermined threshold.

Alternatively, the identifying module 810 further comprises: an acquiring sub-module 814, a second identifying sub-module 815, a calculating sub-module 816, a second detecting sub-module 817 and a third identifying sub-module 818.

The acquiring sub-module 814 is configured to acquire an image frame in front of the balanced vehicle by means of an image acquiring component;
the second identifying sub-module 815 is configured to identify the obstacle in the image frame;
the calculating sub-module 816 is configured to calculate the height of the obstacle identified;
the second detecting sub-module 817 is configured to detect whether the height of the obstacle is greater than a predetermined threshold;
the third identifying sub-module 818 is configured to, identify the obstacle as impassable type, when the height of the obstacle is greater than the predetermined threshold.

Alternatively, the above first control module 820 further comprises: a second measuring sub-module 821, a third detecting sub-module 822, and a first executing sub-module 823.
the second measuring sub-module 821 is configured to measure a distance between the obstacle and the balanced vehicle;
the third detecting sub-module 822 is configured to detect whether the distance is less than a predetermined distance;
the first executing sub-module 823 is configured to execute the step of controlling the balanced vehicle to decelerate, when the distance is less than the predetermined distance,.

Alternatively, the above first control module 820 further comprises: a alert sub-module 824.

The alert sub-module 824 is configured to provide an obstacle alert in a predetermined mode, when the type of the obstacle is impassable obstacle;
wherein, the predetermined mode comprises: at least one of playing a alert tone, vibrating a predetermine part of the balanced vehicle, and flickering a signal light.

Alternatively, the control apparatus for a balanced vehicle further comprises: a judging sub-module 825, a third control sub-module 826 and a second executing sub-module 827.

The judging sub-module is configured to judge whether there is an alternate route in front of the balanced vehicle, when the type of the obstacle is impassable obstacle;
the third control sub-module is configured to control the balanced vehicle to go along the alternate route, when the there is an alternate route in front of the balanced vehicle;
the first control module is further configured to execute the step of controlling the balanced vehicle to decelerate, when there is not an alternate route in front of the balanced vehicle,.

In conclusion, the control apparatus for a balanced vehicle provided in this embodiment identifies the type of the obstacle in front of the balanced vehicle, and controls the balanced vehicle to decelerate if the type of the obstacle is impassable obstacle, thereby solves the problem that the driver is likely to fall over once there is an impassable obstacle in front of the balanced vehicle, and achieves the effect that the balanced vehicle can automatically identify the obstacle and try to prevent tumbles caused by rapid collision with the obstacle when the obstacle is an impassable obstacle.

The control apparatus for a balanced vehicle provided in this embodiment measures the height and distance of the obstacle by means of the distance measuring component, thereby enables the balanced vehicle to identify the type of the obstacle and decelerate to avoid the obstacle according to the distance between the obstacle and the balanced vehicle.

The control apparatus for a balanced vehicle provided in this embodiment also judges whether there is an alternate route in front of the balanced vehicle, and automatically controls the balanced vehicle to go along the alternate route if there is an alternate route, thereby achieves the effect of preventing collision between the balanced vehicle and the obstacles without affecting the normal traveling of the balanced vehicle.

An exemplary embodiment of the present invention provides a balanced vehicle, which is able to implement the control method for a balanced vehicle provided in the present invention, and the balanced vehicle comprises: a control chip and a storage for storing instructions executable by the control chip.
wherein, the control chip is configured to:
identify the type of an obstacle in front of the balanced vehicle;
when the type of the obstacle is impassable obstacle, control the balanced vehicle to decelerate.

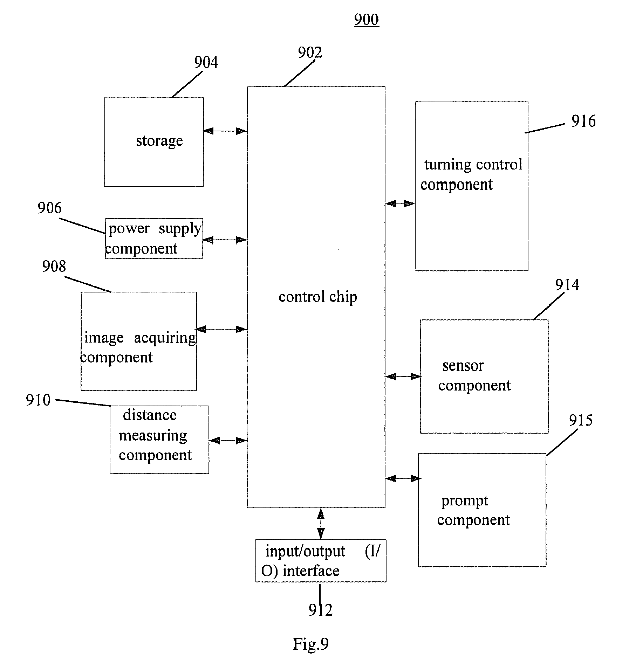

Fig. 9 is a block diagram showing a balanced vehicle according to an exemplary embodiment. With reference to Fig. 9, the balanced vehicle 900 can comprise one or more of a control chip 902, a storage 904, a power supply component 906, an image acquiring component 908, a distance measuring component 910, an input/output (I/O) interface 912, a sensor component 914 and a turning control component 916.

The control chip 902 generally controls the overall control of the balanced vehicle 900, such as operations relevant to moving forward, moving backward, acceleration and deceleration. Besides, the control chip 902 can also comprise one or more modules to facilitate interaction between the control chip 902 and other components. For example, the control chip 902 may comprise an image acquiring module to facilitate interaction between the image acquiring component 908 and the control chip 902.

The storage 904 is configured to store various types of data so as to support operation of the balanced vehicle 900. Examples of these data comprise any instructions, image data and distance data of the balanced vehicle to be operated on the balanced vehicle 900. The storage 904 can be realized by any type of volatile or nonvolatile storage devices or their combinations, such as Static Random Access Memory (SRAM), Electrically Erasable Programmable Read Only Memory (EEPROM), Erasable Programmable Read Only Memory (EPROM), Programmable Read Only memory (PROM), Read Only Memory (ROM), magnetic memory, flash memory and magnetic disk or optical disc.

The power supply component 906 supplies electric power to the various components of the balanced vehicle 900. The power component 906 may include a power supply management system, one or more power supplies and other components related to generation, management and electric power distribution of the balanced vehicle 900.

The image acquiring component 908 is included in the balanced vehicle 900. In some embodiments, the image acquiring component 908 comprises a front camera and/or a rear camera. When the balanced vehicle 900 is in an operation mode, such as capture mode or video mode, the front camera and/or rear camera can receive external multimedia data. Each of the front camera and the rear camera can be a fixed optical lens system or can have focal lengths and optical zoom functionality.

The distance measuring component 910 is configured to transmit and/or receive detection signal. For example, the distance measuring component 910 includes a laser transmitter, when the balanced vehicle 900 is in an operation mode, such as when it receives a reflected laser, the laser transmitter is configured to receive the reflected signal of the detection signal. The received reflected signal can be further stored in the storage 904.

The I/O interface 912 provides interface between the control chip 902 and the peripheral interface modules, and the above mentioned peripheral interface modules may be USB flash disk and audio player and so on.

The sensor component 914 includes one or more sensor for providing condition assessment from every aspect for the balanced vehicle 900. For example, the sensor component 914 can detect an open/close state of the balanced vehicle 900, and can detect an orientation or acceleration/deceleration changes of the balanced vehicle 900. The sensor component 914 may also include an optical sensor, such as CMOS or CCD image sensor, to be used in imaging apparatus. In some embodiments, the sensor component 914 may include an acceleration sensor, a gyroscope sensor, a magnetic sensor, a pressure sensor or a temperature sensor, etc..

The turning control component 916 is configured to facilitate control of turning of the balanced vehicle 900. The turning control component 916 may be a manual controlled turning control component, and may also be a leg controlled turning control component.

In exemplary embodiments, the balanced vehicle 900 can be realized by one or more of Application Specific Integrated Circuit (ASIC), Digital Signal Processor (DSP), Digital Signal Processing Device (DSPD), Programmable Logic Device (PLD), Field Programmable Gate Array (FPGA), controller, microcontroller, microprocessor or other electronic elements, for performing the above mentioned control method for a balanced vehicle.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A control method for a balanced vehicle, **characterized in that**, the method comprises:
identifying (202) the type of an obstacle in front of the balanced vehicle
if the type of the obstacle is impassable obstacle, controlling (204) the balanced vehicle to decelerate.

2. The method according to claim 1, **characterized in that**, the type is impassable obstacle or passable obstacle; and
the method further comprises:
if the type of the obstacle is passable obstacle, increasing a driving force to the balanced vehicle so that it continues moving.

3. The method according to claims 1 or 2, **characterized in that**, identifying the type of the obstacle in front of the balanced vehicle comprises:
measuring (301) the height of the obstacle in front of the balanced vehicle by means of a distance measuring component;
detecting (302) whether the height of the obstacle is greater than a predetermined threshold;
if the height of the obstacle is greater than the predetermined threshold, identifying (303) the type of the obstacle as impassable type.

4. The method according to claims 1 or 2, **characterized in that**, identifying the type of the obstacle in front of the balanced vehicle comprises:
acquiring (501) an image frame in front of the balanced vehicle by means of an image acquiring component;
identifying (502) the obstacle in the image frame;
calculating (503) the height of the obstacle identified;
detecting whether the height of the obstacle is greater than a predetermined threshold;
if the height of the obstacle is greater than the predetermined threshold, identifying (505) the type of the obstacle as impassable type.

5. The method according to any one of claims 1 to 4, **characterized in that**, the method further comprises:
measuring (509) the distance between the obstacle and the balanced vehicle;
detecting (510) whether the distance is less than a predetermined distance;
if the distance is less than the predetermined distance, controlling the balanced vehicle to decelerate.

6. The method according to any one of claims 1 to 5, **characterized in that**, the method further comprises:
if the type of the obstacle is impassable obstacle, providing (512) an obstacle alert in a predetermined mode;
wherein, the predetermined mode comprises at least one of playing a alert tone, vibrating a predetermine part of the balanced vehicle, and flickering a signal light.

7. The method according to any one of the claims 1 to 6, **characterized in that**, the method further comprises:
if the type of the obstacle is impassable obstacle, judging (507) whether there is an alternate route in front of the balanced vehicle;
if there is the alternate route in front of the balanced vehicle, controlling the balanced vehicle to go along the alternate route.
if there does not exist the alternate route in front of the balanced vehicle, controlling the balanced vehicle to decelerate.

8. A control apparatus for a balanced vehicle, **characterized in that**, the apparatus comprises:
an identifying module (710) configured to identify the type of an obstacle in front of the balanced vehicle, and type comprising: impassable obstacle;
a first control module (720) configured to control the balanced vehicle to decelerate, when the type of the obstacle is impassable obstacle.

9. The apparatus according to claim 8, **characterized in that**, the type further comprises:
passable obstacle;
the apparatus further comprises:
a second control module (830) configured to increase a driving force to the balanced vehicle so that it continues moving, when the type of the obstacle is passable obstacle.

10. The apparatus according to claims 8 or 9, **characterized in that**, the identifying module comprises:
a first measuring sub-module (811) configured to measure the height of the obstacle in front of the balanced vehicle by means of a distance measuring component.
a first detecting sub-module (812) configured to detect whether the height of the obstacle is greater than a predetermined threshold;
a first identifying sub-module (813) configured to identify the type of the obstacle as impassable type, when the height of the obstacle is greater than the predetermined threshold.

11. The apparatus according to claims 8 or 9, **characterized in that**, the identifying module comprises:
an acquiring sub-module (814) configured to acquire an image frame in front of the balanced vehicle by means of an image acquiring component;
a second identifying sub-module (815) configured to identify the obstacle in the image frame;
a calculating sub-module (816) configured to calculate the height of the obstacle identified;
a second detecting sub-module (817) configured to detect whether the height of the obstacle is greater than a predetermined threshold;
a third identifying sub-module (818) configured to identify the type of the obstacle as impassable type, when the height of the obstacle is greater than the predetermined threshold.

12. The apparatus according to any one of claims 8 to 11, **characterized in that**, the first control module further comprises:
a second measuring sub-module (821) configured to measure the distance between the obstacle and the balanced vehicle;
a third detecting sub-module (822) configured to detect whether the distance is less than a predetermined distance;
a first executing sub-module (823) configured to execute the step of controlling the balanced vehicle to decelerate, when the distance is less than the predetermined distance.

13. A balanced vehicle, **characterized in that**, the balanced vehicle comprises:
a control chip;
a storage for storing instructions executable by the control chip;
wherein, the control chip is configured to:
identify the type of an obstacle in front of the balanced vehicle;
if the type of the obstacle is impassable obstacle, control the balanced vehicle to decelerate.

14. A computer program including instructions for executing the steps of a control method for a balanced vehicle according to claim 1 when said program is executed by a computer.

15. A recording medium readable by a computer and having recorded thereon a computer program including instructions for executing the steps of a control method for a balanced vehicle according to any one of claims 1 to 7.
